# EUROPEAN PATENT SPECIFICATION

(11) **EP 2 486 250 B1**
(45) Date of publication and mention of the grant of the patent: **05.09.2018**
(21) Application number: 10760699.8
(22) Date of filing: 05.10.2010
(51) Int. Cl.: F01M 1/12, F01M 11/06, F01M 11/12, F16N 7/40

(54) **SYSTEM FOR LUBRICATING A TWO-STROKE ENGINE**
SYSTEM ZUM SCHMIEREN EINES ZWEITAKTMOTORS
SYSTÈME DE LUBRIFICATION D'UN MOTEUR À DEUX TEMPS

(30) Priority: 08.10.2009 EP 09172524; 08.10.2009 US 249828 P
(43) Date of publication of application: 15.08.2012
(73) Proprietor: Shell Internationale Research Maatschappij B.V., 2596 HR The Hague (NL)
(72) Inventor: HAMMETT, Jeremy Richard, 21107 Hamburg (DE)
(74) Representative: Shell Legal Services IP
(86) International application number: PCT/EP2010/064789
(87) International publication number: WO 2011/042412

(56) References cited:
- DE-A1- 10 124 476
- JP-A- 7 054 627
- JP-B2- 3 323 301
- US-A1- 2006 148 661

## Description

The present invention relates to a system for lubricating a two-stroke engine.

JP 07 054627 relates to a lubricating oil distribution system of a 4-stroke diesel engine using system oil and cylinder oil from another system. Contrary to the present invention, more than one type of oil is used in the system of JP 07 054627.

DE 101 24 476 relates to an oil supply device.

US 2006/148661 relates to a method and system for improving fuel economy and environmental impact whilst operating a 2-stroke engine.

As explained in for example WO 2006/032271 A1, two-stroke engines as used in marine or stationary applications are usually equipped with two separate lubricating oil systems. One lubricating system comprises a so-called system oil that normally is used for lubrication and cooling of the engine's bearings and e.g. oil-cooled pistons as well as for activation and/or control of various valves and the like. The other lubricating system comprises a cylinder oil that is normally used for lubrication of the engine's cylinders, piston rings and piston assembly.

In typical two-stroke crosshead engines, the cylinder oil is spent continuously by each turn of the engine whereas the system oil in principle is not spent (except by smaller unintentional leakages). The cylinder oil is often referred to as an "all-loss" lubricant as the oil is spent. The use and various types of both system oil(s) and cylinder oil(s) is well known in the art.

A problem of the known systems for lubricating a two-stroke engine is that they are relatively spacious, amongst others resulting in high capital expenses (CAPEX). As an example, known systems require a rather extensive sump (or "lube oil drain tank") size, i.e. the space needed to collect the used system oil.

It is an object of the present invention to minimize the above problem.

It is another object of the present invention to simplify the known systems for lubricating a two-stroke engine.

It is a further object of the present invention to provide an alternative system for lubricating a two-stroke engine.

One or more of the above or other objects are achieved according to the present invention by providing a system for lubricating a two-stroke engine, the system at least comprising:
- a two-stroke engine having a first inlet for a cylinder oil, and a second and third inlet for a system oil;
- a sump for system oil used in the engine, the sump having an inlet and an outlet, the outlet being connected to the second and third inlets of the engine;
- an oil reservoir having a first outlet connected to the first inlet of the engine, a second outlet connected to the inlet of the sump and a first inlet connected to the outlet of the sump); and
- a splitter connected to the outlet of the sump, the second and third inlets of the engine, and the first inlet of the oil reservoir.

It has been found that by using the surprisingly simple system according to the present invention, the CAPEX and OPEX can be significantly lowered, in particular as less oil storage facilities are required. In this respect it is noted that the OPEX is lower because the system facilitates a lower volume of oil required for operational purposes.

A special advantage according to the present invention is that only one type of oil is needed and used for both the cylinder oil and the system oil in the lubricating system (unlike e.g. JP 07 054627, in which the cylinder oil and system oil have a different composition). This results not only in simplicity of operation, but also in reduced storage capacity, reduced inventory for the oils, etc. Also, the system according to the present invention can easily be implemented in new vessels and retrofitted in existing vessels.

There are no particular limitations regarding the two-stroke engine as used according to the present inventions. Preferably the two-stroke engine is one as used in marine diesel engines. The person skilled in the art will readily understand that the term "marine" does not restrict such engines to those used in water-borne vessels. That is to say, in addition said term also includes engines used for power generation applications.

Typically the two-stroke engine is a direct coupled, direct reversing two-stroke cycle engine. Preferably the two-stroke engine is of crosshead construction with a diaphragm and stuffing boxes separating the power cylinders from the crankcase to prevent combustion products from entering the crankcase and mixing with the system oil.

As mentioned above, the person skilled in the art is familiar with the use and various types of "cylinder oil" and "system oil". As according to the present invention a single type of oil supplied from the same storage tank is used for both the cylinder oil and the system oil, the person skilled in the art will understand that it needs to provide for good oxidation and thermal stability, water demulsibility, corrosion protection and good antifoam performance.

In a further aspect the present invention provides a vessel containing the system according to the present invention. The vessel will typically be a marine vessel.

In another aspect the present provides a method for lubricating a two-stroke engine, wherein the oil used as a system oil and a cylinder oil in the engine is supplied from the same sump (and/or the same oil reservoir). Preferably, the method at least comprises the steps of:
(a) supplying to the engine, from a first reservoir, a cylinder oil at a first inlet and a system oil at a second and third inlet;
(b) removing used system oil from the engine to a sump;
(c) returning first and second parts of the used system oil to the second and third inlet of the engine and a third part of the used system oil to the oil reservoir,
wherein the first, second and third parts of the used system oil are fed via a splitter.

Hereinafter the invention will be further illustrated by the following non-limiting drawing. Herein shows:
Fig. 1 schematically a first embodiment of a system for lubricating a two-stroke engine in accordance with the present invention; and
Fig. 2 schematically a second embodiment of a system for lubricating a two-stroke engine in accordance with the present invention.

For the purpose of this description, a single reference number will be assigned to a line as well as a stream carried in that line. Same reference numbers refer to similar components.

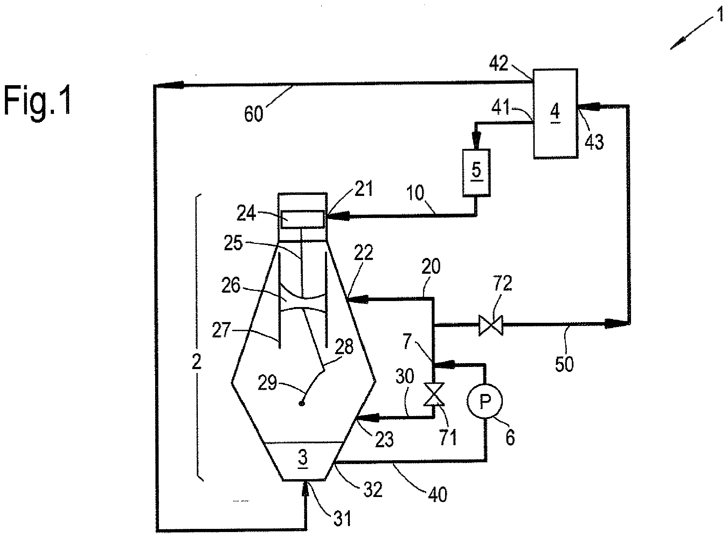

Figure 1 schematically shows a system (generally indicated with reference no. 1) for lubricating a two-stroke engine.

The system 1 of Figure 1 comprises a two-stroke engine 2, a sump 3, and an oil reservoir 4.

The two-stroke engine 2 has a first inlet 21 for a cylinder oil 10 to be fed to the piston 24 (which piston 24 may subsequently distribute the cylinder oil by its movement), and a second 22 and third inlet 23 for a system oil 20,30. The engine 2 may further comprise a further outlet (not shown) connected to a waste tank for collecting consumed cylinder oil. The engine 2 will typically further comprise a piston rod 25, a bearing 26, a guide surface 27 for the (crosshead) bearing 26, a connecting rod 28 and a crank shaft 29 coupled to a propeller shaft (not shown; perpendicular to the view of Fig. 1). Preferably and as shown in the embodiment of Figure 1, the engine 2 is a two-stroke crosshead engine. Thus, in this embodiment, at inlet 22 the system oil 20 is fed as a feed to the crosshead bearing 26 and guide surface 27, whilst at inlet 23, the system oil 30 is fed as a feed to the bearing supporting crankshaft 29 and as a cooling oil for the piston 24.

The sump 3 for system oil used in the engine 2 has an inlet 31 and an outlet 32, the outlet 32 being connected to the second and third inlets 22,23 of the engine 2. Typically and as shown in the embodiment of Figure 1, the sump 3 forms part of the engine 2; however, the sump 3 may also be located further away from the engine 2. In the latter case, the sump 3 will have another inlet for used system oil.

The oil reservoir 4 has a first outlet 41 connected to the first inlet 21 of the engine 2, a second outlet 42 connected to the inlet 31 of the sump 3 and a first inlet 43 connected to the outlet 32 of the sump 3. As the oil reservoir 4 may be operated as a "weir", the oil reservoir 4 does not need the presence of level controllers; any overflow in the oil reservoir 4 can be removed via second outlet 42 and fed via stream 60 to the inlet 31 of the sump 3.

Preferably, and as shown in Figure 1, the system 1 further comprises a cleaning unit 5 between the first outlet 41 of the oil reservoir 4 and the first inlet 21 of the engine 2 for removing particulate matter. This particulate matter may have been generated by degeneration of the system oil as used in the engine 2, which particulate matter has been recycled together with the system oil to the oil reservoir 4. Typically, the cleaning unit 5 will be in the form of a filter, such as a mesh filter or centrifugal filter; preferably the filter is an automatic back-flushing filter such as available from BOLL & KIRCH Filterbau GmbH.

If needed, between first outlet 41 of the oil reservoir 4 and the first inlet 21 of the engine 2 additional additives may be added to the cylinder oil, e.g. by means of injection nozzles.

Also, as shown in Figure 1, it is preferred that the system 1 further comprises a pressurizing unit 6 between the outlet 32 of the sump 3 and the second and third inlets 22,23 of the engine 2.

Further it is preferred that the system 1 further comprises (typically downstream of the pressurizing unit 6) a splitter 7 connected to the outlet 32 of the sump 3, the second and third inlets 22,23 of the engine 2, and the first inlet 43 of the oil reservoir 4; the splitter 7 splits the stream 40 coming from the unit 6 into two streams 20,30 feeding into two separate places of the engine 2, at inlets 22 and 23. It goes without saying that the return line 50 from the unit 6 to the oil tank 4 may also be placed just upstream of the splitter 7.

If needed, appropriate valves may be present to achieve the desired pressures in the various lines. In the embodiment of Figure 1, valves 71, 72 are placed between the splitter 7 and the inlet 32 of the sump 3 and between the splitter 7 and the first inlet 43 of the oil reservoir 4.

The person skilled in the art will readily understand that further elements may be present if desired.

During use of the system in Figure 1, from first outlet 41 of the first reservoir 4, an oil is supplied as a cylinder oil 10 via cleaning unit 5 to the piston 24 of the engine 2 at the first inlet 21 thereof. The cylinder oil is consumed (as an "all-loss" lubricant) whilst lubricating the piston 24 and any residue may be sent to a waste tank (not shown) for collecting consumed cylinder oil. Typically, no consumed cylinder oil is sent to the sump 3, as this may affect the quality of the oil used in the system 1 too much.

Also from oil reservoir 4, via outlet 42 thereof, oil 60 is sent to the inlet 31 of the sump. From the sump 3, via outlet 32 thereof, oil 40 is sent via pressurizing unit 6 to the splitter 7. From the splitter 7 first and second parts 20,30 of the oil are fed as system oil to the engine 2 at second 22 and third inlets 23 thereof. The feed pressure at second inlet 22 of the engine 2 is typically higher than at the third inlet 23; typical pressures at second and third inlets 22,23 are 15 and 5 bar, respectively (although that may of course depend on the actual engine used). Subsequently, used system oil (e.g. outflow of bearing 26 and returned oil used for cooling the piston 24) from the engine 2 is collected in the sump 3. A third part 50 of the system oil coming from the splitter 7 is returned to inlet 43 of the oil reservoir 4 for reuse.

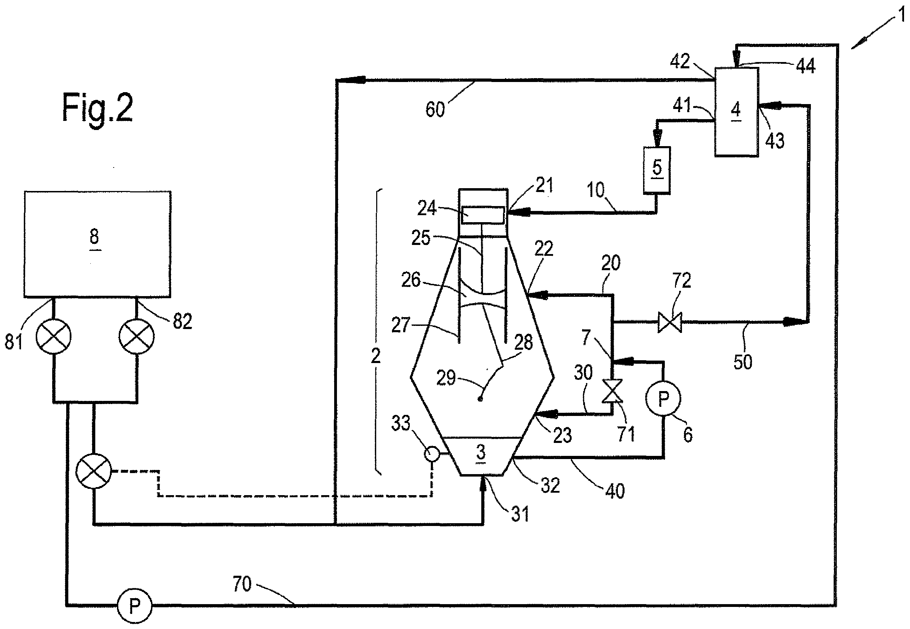

In the embodiment of Figure 2, the system 1 further comprises a second oil reservoir 8 in addition to the (first) oil reservoir 4. The second outlet 42 of the oil reservoir 4 is connected to an inlet 81 of the second oil reservoir 8, and the second oil reservoir 8 has an outlet 82 connected to a second inlet 44 of the oil reservoir 4.

Preferably, the sump 3 is provided with a level controller 33, which controller 33' is functionally connected with the second oil reservoir 8. Additional oil 70 may be transferred from the second oil reservoir 8 to the oil reservoir 4 (and subsequently to the sump 3), if required, e.g. in case the level controller 33 determines that the oil level in the sump 3 has dropped to below a pre-determined lower limit.

## Claims

1. System (1) for lubricating a two-stroke engine (2), the system (1) at least comprising:
- a two-stroke engine (2) having a first inlet (21) for a cylinder oil, and a second (22) and third inlet (23) for a system oil;
- a sump (3) for system oil used in the engine (2), the sump (3) having an inlet (31) and an outlet (32), the outlet (32) being connected to the second and third inlets (22,23) of the engine (2);
- an oil reservoir (4) having a first outlet (41) connected to the first inlet (21) of the engine (2), a second outlet (42) connected to the inlet (31) of the sump (3) and a first inlet (43) connected to the outlet (32) of the sump (3); and
- a splitter (7) connected to the outlet (32) of the sump (3), the second and third inlets (22,23) of the engine (2), and the first inlet (43) of the oil reservoir (4).

2. System (1) according to claim 1, further comprising a cleaning unit (5) between the first outlet (41) of the oil reservoir (4) and the first inlet (21) of the engine (2) for removing particulate matter.

3. System (1) according to claim 1 or 2, further comprising a pressurizing unit (6) between the outlet (32) of the sump (3) and the second and third inlets (22,23) of the engine (2).

4. System (1) according to one or more of the preceding claims, wherein the second outlet (42) of the oil reservoir (4) is connected to an inlet (81) of a second oil reservoir (8), the second oil reservoir (8) having an outlet (82) connected to a second inlet (44) of the oil reservoir (4).

5. System according to one or more of the preceding claims, wherein the sump (3) is provided with a level controller (33) functionally connected with the second oil reservoir (8).

6. System according to one or more of the preceding claims, wherein the engine (2) is a two-stroke crosshead engine.

7. System (1) according to claim 6, wherein the crosshead of the engine can be fed with oil at the second inlet (22) of the engine (2).

8. Vessel containing the system (1) according to one or more of the preceding claims.

9. Method for lubricating a two-stroke engine (2), wherein the oil used as a system oil and a cylinder oil in the engine (2) is supplied from the same sump (3), and wherein only one type of oil is used for both the cylinder oil and the system oil, the method at least comprising the steps of:
(a) supplying to the engine (2), from a first reservoir (4), a cylinder oil at a first inlet (21) and a system oil at a second (22) and third inlet (23);
(b) removing used system oil from the engine (2) to a sump (3);
(c) returning first and second parts of the used system oil to the second (22) and third inlet (23) of the engine (2) and a third part of the used system oil to the oil reservoir (4),
wherein the first, second and third parts of the used system oil are fed via a splitter (7).

## Patentansprüche

1. System (1) zum Schmieren eines Zweitaktmotors (2), wobei das System (1) wenigstens Folgendes umfasst:
- einen Zweitaktmotor (2) mit einem ersten Einlass (21) für ein Zylinderöl, und einem zweiten (22) und einem dritten (23) Einlass für ein Systemöl;
- einen Sumpf (3) für in dem Motor (2) verwendetes Systemöl, wobei der Sumpf (3) einen Einlass (31) und einen Auslass (32) aufweist, wobei der Auslass (32) mit dem zweiten und dem dritten Einlass (22, 23) des Motors (2) verbunden ist;
- einen Ölkessel (4), der einen ersten Auslass (41), der mit dem ersten Einlass (21) des Motors (2) verbunden ist, einen zweiten Auslass (42), der mit dem Einlass (31) des Sumpfes (3) verbunden ist, und einen ersten Einlass (43), der mit dem Auslass (32) des Sumpfes (3) verbunden ist, aufweist; und
- ein Splitter (7), der mit dem Auslass (32) des Sumpfes (3), dem zweiten und dem dritten Einlass (22, 23) des Motors (2) und dem ersten Einlass (43) des Ölkessels (4) verbunden ist.

2. System (1) nach Anspruch 1, ferner umfassend eine Reinigungseinheit (5) zwischen dem ersten Einlass (41) des Ölkessels (4) und dem ersten Einlass (21) des Motors (2) zum Entfernen von Partikelmasse.

3. System (1) nach Anspruch 1 oder 2, ferner umfassend eine unter Druck setzende Einheit (6) zwischen dem Auslass (32) des Sumpfes (3) und dem zweiten und dem dritten Einlass (22, 23) des Motors (2).

4. System (1) nach einem oder mehreren der vorhergehenden Ansprüche, wobei der zweite Auslass (42) des Ölkessels (4) mit einem Einlass (81) eines zweiten Ölkessels (8) verbunden ist, wobei der zweite Ölkessel (8) einen Auslass (82) aufweist, der mit einem zweiten Einlass (44) des Ölkessels (4) verbunden ist.

5. System nach einem oder mehreren der vorhergehenden Ansprüche, wobei der Sumpf (3) mit einer Mengensteuerung (33), die funktional mit dem zweiten Ölkessel (8) verbunden ist, ausgestattet ist.

6. System nach einem oder mehreren der vorhergehenden Ansprüche, wobei der Motor (2) ein Zweitaktkreuzkopfmotor ist.

7. System (1) nach Anspruch 6, wobei dem Kreuzkopf des Motors Öl an dem zweiten Einlass (22) des Motors (2) zugeführt werden kann.

8. Gefäß, das System (1) nach einem oder mehreren der vorhergehenden Ansprüche enthaltend.

9. Verfahren zum Schmieren eines Zweitaktmotors (2), wobei das als ein Systemöl und als ein Zylinderöl in dem Motor (2) verwendete Öl von demselben Sumpf (3) zugeführt wird, und wobei nur eine Art von Öl sowohl für das Zylinderöl als auch das Systemöl verwendet wird, wobei das Verfahren die folgenden Schritte umfasst:
(a) Zuführen eines Zylinderöls von einem ersten Kessel (4) an den Motor (2) an einem ersten Einlass (21) und eines Systemöls an einem zweiten (22) und einem dritten Einlass (23);
(b) Entfernen von verwendetem Systemöl von dem Motor (2) an einen Sumpf (3);
(c) Zurückführen eines ersten und eines zweiten Teils des verwendeten Systemöls an den zweiten (22) und den dritten Einlass (23) des Motors (2) und eines dritten Teils des verwendeten Systemöls an den Ölkessel (4), wobei der erste, der zweite und der dritte Teil des verwendeten Systemöls über einen Splitter (7) zugeführt werden.

## Revendications

1. Système (1) de lubrification d'un moteur à deux temps (2), le système (1) comprenant au moins :
- un moteur à deux temps (2) ayant une première entrée (21) pour une huile de cylindre, et une deuxième (22) et une troisième entrée (23) pour une huile de système ;
- un puisard (3) pour l'huile de système utilisée dans le moteur (2), le puisard (3) ayant une entrée (31) et une sortie (32), la sortie (32) étant reliée aux deuxième et troisième entrées (22, 23) du moteur (2) ;
- un réservoir d'huile (4) ayant une première sortie (41) reliée à la première entrée (21) du moteur (2), une seconde sortie (42) reliée à l'entrée (31) du puisard (3) et une première entrée (43) reliée à la sortie (32) du puisard (3) ; et
- un séparateur (7) relié à la sortie (32) du puisard (3), aux deuxième et troisième entrées (22,23) du moteur (2), et à la première entrée (43) du réservoir d'huile (4).

2. Système (1) selon la revendication 1, comprenant en outre une unité de nettoyage (5) entre la première sortie (41) du réservoir d'huile (4) et la première entrée (21) du moteur (2) pour retirer les particules.

3. Système (1) selon la revendication 1 ou 2, comprenant en outre une unité de pressurisation (6) entre la sortie (32) du puisard (3) et les deuxième et troisième entrées (22, 23) du moteur (2).

4. Système (1) selon l'une ou plusieurs des revendications précédentes, la seconde sortie (42) du réservoir d'huile (4) étant reliée à une entrée (81) d'un second réservoir d'huile (8), le second réservoir d'huile (8) ayant une sortie (82) reliée à une seconde entrée (44) du réservoir d'huile (4).

5. Système selon l'une ou plusieurs des revendications précédentes, le puisard (3) étant pourvu d'un contrôleur de niveau (33) relié de manière fonctionnelle au second réservoir d'huile (8).

6. Système selon l'une ou plusieurs des revendications précédentes, le moteur (2) étant un moteur à crosse à deux temps.

7. Système (1) selon la revendication 6, la crosse du moteur pouvant être alimentée en huile au niveau de la deuxième entrée (22) du moteur (2).

8. Récipient contenant le système (1) selon l'une ou plusieurs des revendications précédentes.

9. Procédé de lubrification d'un moteur à deux temps (2), l'huile utilisée en tant qu'huile de système et en tant qu'huile de cylindre dans le moteur (2) étant alimentée par le même puisard (3), et un seul type d'huile étant utilisé à la fois pour l'huile de cylindre et l'huile de système, le procédé comprenant au moins les étapes :
(a) de fourniture au moteur (2), à partir d'un premier réservoir (4), d'une huile de cylindre au niveau d'une première entrée (21) et d'une huile de système au niveau d'une deuxième (22) et d'une troisième entrée (23) ;
(b) de retrait de l'huile de système utilisée du moteur (2) dans un puisard (3) ;
(c) de renvoi des première et deuxième parties de l'huile de système utilisée vers la deuxième (22) et la troisième entrée (23) du moteur (2) et d'une troisième partie de l'huile de système utilisée vers le réservoir d'huile (4),
les première, deuxième et troisième parties de l'huile de système utilisée étant alimentées à travers un séparateur (7).
